# EUROPEAN PATENT APPLICATION

(11) **EP 3 131 012 A1**
(43) Date of publication of application: **15.02.2017**
(21) Application number: 15181112.2
(22) Date of filing: 14.08.2015
(51) Int. Cl.: G06F 9/54

(54) **METHOD OF AUTOMATICALLY LINKING FUNCTIONS**

(71) Applicant: Vodafone Holding GmbH, 40213 Düsseldorf (DE)
(72) Inventor: Siquenique, Joao, 40668 Meerbusch (DE)
(74) Representative: Jostarndt Patentanwalts-AG

(57) **Abstract**

The invention describes a method of automatically linking at least a first function (11) and a second function (12, 22), wherein the first function (11) comprises at least a first sub-function A, and wherein the second function (12, 22) comprises at least a second sub-function A, the method comprising the steps of:
- receiving a first identifier in a first network entity (150), wherein the first identifier is assigned to the first function (11) and a first user (10), wherein the first identifier enables connection to the first function (11) by means of a communication network, wherein the first identifier enables identification of the first user (10), and wherein the first identifier comprises first information related to the first sub-function A,
- automatically determining by means of the first network entity (150) whether the second sub-function A of the second function (12, 22) is compatible with the first sub-function A of the first function (11) of the first user (10),
- automatically linking by means of the first network entity (150) the first sub-function A of the first function (11) of the first user (10) with the second sub-function A of the second function (12, 22) such that a connection between the first function (11) and the second function (12, 22) is enabled if it is determined that the second sub-function A of the second function (12, 22) is compatible with the first sub-function A of the first function (11) of the first user (10).

The invention further describes a corresponding first network entity (150), communication system, communication device and computer program product.

## Description

### Field of the invention:

The invention relates to a method of automatically linking functions. The invention further relates to a first network entity for linking functions. The invention finally relates to a corresponding computer program product.

### Background of the invention:

Today a multitude of devices is provided with the ability to exchange information via the Internet or even to interact which each other via the Internet. The Internet of Things (IoT) offers an enormous amount of opportunities and options for the user. At the same time handling of the opportunities and options is getting more and more complicated. Enabling the connection between the devices or sharing information available by means of such devices may be cumbersome.

### Summary of the invention:

It is an object of the present invention to provide a method enabling a simplified interaction between devices and services which can communicate with each other via a communication network.

According to a first aspect a method of automatically linking or connecting at least a first function and a second function is provided. The first function comprises at least a first sub-function A. The second function comprises at least a second sub-function A.

The method comprises the steps of:
- receiving a first identifier in a first network entity, wherein the first identifier is assigned to the first function and a first user, wherein the first identifier enables connection to the first function by means of a communication network, wherein the first identifier enables identification of the first user, and wherein the first identifier comprises first information related to the first sub-function A,
- automatically determining by means of the first network entity whether the second sub-function A of the second function is compatible with the first sub-function A of the first function of the first user,
- automatically linking by means of the first network entity the first sub-function A of the first function of the first user with the second sub-function A of the second function such that a connection between the first function and the second function is enabled if it is determined that the second sub-function A of the second function is compatible with the first sub-function A of the first function of the first user.

The term function may relate to a device or a service. Each function may comprise one, two, three or more sub-function. The function may be identical with the sub-function. A first function may relate, for example, to a washing machine. Sub-functions which are comprised by the washing machine may be washing capability, status information, control functions etc.. Another second function may relate to a Facebook account. Sub-functions which are comprised by the Facebook account may be, for example, an address book, a picture or video collection, a user profile and the like. The first user is not necessarily a human being but may also be a unit or service enabling functions and related sub-functions.

The communication network comprises every possibility to enable connection between the first and second function. The communication network may relate to a Public Land Mobile Network (GSM, UMTS, LTE and the like), Local Area Networks (e.g. Wi-Fi), Bluetooth or ZigBee technology or any other wired or wireless communication technology or combinations thereof which are suitable to enable a connection between the first and second function.

The identification of the first user may comprise the clear name of the user, an alias of the user, an identification of an account assigned to the first user or any other suitable information in order to identify the first user in a direct or indirect way. The first information related to the first sub-function A of the first function of the first user may comprise a complete description of the sub-functions of the respective function including software code to access the sub-functions. Alternatively, it may only comprise a hint or address (e.g. manufacturer of a device) which enables to get a description of the sub-functions. The second function may relate to the first user or another second user or a group of users. The connection between the first and the second function may be enabled via the communication network or it may only be initiated via the communication network. In the latter case the connection may be, for example, established by means of the local connection technology as, for example, Bluetooth. An example may be an Internet radio (first function) which can be controlled (first sub-function A) and a mobile device (second function) comprising a control application (second sub-function A) being adapted to control the Internet radio. The internet radio starts the first time and asks for an identification of the user in the Internet of Things (IoT) domain. The owner of the Internet radio provides the identification of his or her account in the loT domain. The account in the loT domain is administered by means of the first network entity (see description below). The Internet radio connects to the loT domain by means of the identification and provides the first identifier. The first identifier comprises an IP address of the Internet radio, the identity of the owner (maybe the same as the account name) and at least a hint to the control functions. It is checked in the first network entity in the loT domain whether there are compatible functions related to the owner (previously registered mobile device with control application). The control functions are linked to the control application. The mobile device is contacted and the application started and a new control field is generated within the control application upon confirmation by the user or owner of the mobile device. The new control field enables control of the sub-functions of the Internet radio by means of the control application using a local connection technology (bluetooth). Alternatively, the first network entity may automatically search in the Internet for the control application, propose installation of the control application on the mobile device and enable or even perform configuration of the control application in order to access the sub-functions of the Internet radio by means of the control application. The first network entity may be a server or a logical node. The first identifier may comprise the Internet Protocol (IP) address or the international Mobile Equipment Identity (IMEI) of the function (device or service). The first identifier may comprise any information that the function (device or service) can provide automatically so that the function can be identified and its sub-functions (capabilities) can be identified.

The method may further comprise the additional steps of:
- receiving prior to receiving the first identifier a second identifier in the first network entity, wherein the second identifier is assigned to the second function, wherein the second identifier enables connection to the second function by means of the communication network, wherein the second identifier comprises second information related to the second sub-function A of the second function.

Identifiers comprising, for example, the IP address or the IMEI in combination with information regarding the user of the service or owner of the device are used in order to automatically check compatibility of sub-functions and enable corresponding links. Starting point may be that the user may automatically create an account in the first network entity as soon as the user starts, for example, his or her mobile device the first time. Each service or device which can be part of the loT domain may be connected to the account in order to check compatibility of functions or sub-functions and link compatible sub-functions. The method may be started automatically as soon as, for example, an loT enabled device may be started within a personal network of user. Alternatively, the user may be contacted in order to initiate access to the account for checking compatibility and providing the link.

An loT enabled washing machine may, for example, started the first time within a private local network of the owner of the washing machine. The account which may be connected to the mobile device of the user or the private local network by means of an application may be informed about the loT enabled washing machine, it's IP address and a status information functionality which is a sub-function of the washing machine. The account checks, for example, other available loT enabled devices of the user and finds a TV set which is adapted to provide the status information related to the status of the loT enabled washing machine. This sub-function of the TV set which is already available via the account is linked with the status information functionality of the washing machine such that the user can check the status of the washing machine by means of the TV set without even being aware that it is possible to link both functions or sub-functions.

The connection between the first function and the second function may be constituted via the first network entity. The first network entity may in this case be a kind of interface connecting the first function and the second function. The information exchange between the first and the second function uses an information channel provided by the first network entity. Such an embodiment may be especially useful if the services or functions owned by the owner are placed at different physical locations.

The method may alternatively or in addition comprise the additional steps of:
- generating first linking information by means of the first network entity,
- submitting the first linking information from the first network entity to the first function or the second function,
- establishing the connection between the first function and the second function by means of the first function of or the second function.

One of the devices or services may contact the other device or service either by means of a local communication technology (e.g. Bluetooth) or, for example, via the Internet. The first network entity triggers in this case the link or connection between two functions but the information is directly exchanged between the functions without using the first network entity. Such an embodiment may be especially useful if the functions (device or service) owned by the owner are placed near to each other and local connection technologies are available.

The method may further comprise the additional steps of:
- contacting a second network entity by means of the first network entity based on the first information related to the first sub-function A of the first function of the first user,
- receiving in the first network entity second information related to the first sub-function A of the first function of the first user.

Receiving second information related to the first sub-function A of the first function of the first user from the second network entity may, for example, enable regular updates of the sub-functions of the functions by means of the manufacturer of the device or the service provider of the service. It may in this case be possible that sub-functions which are not compatible get compatible and can be linked because of a, for example, firmware update of the first or second function. The first network entity may, for example, regularly check whether such second information may be available. Furthermore, it may be more efficient to provide detailed information (including software code to access functions or sub-functions) about functions and sub-functions by means of the respective manufacturer or service provider instead of submitting this information by means of the first identifier. The first identifier may for example only comprise an Internet address which can be contacted in order to automatically download the respective second information. The first network entity provides an identification of the function and the second network entity enables access to the second information. The compatibility between the second sub-function A of the second function and the first sub-function A of the first function of the first user may, for example, be determined by means of the second information related to the first sub-function A.

The second function may be assigned to the first user. This embodiment may enable the first user to manage loT enabled devices and services which are assigned to his name or account in an easy way as described above.

The second function may be is assigned to a second policy of the first user, the second policy may comprise access rights to the second function by means of a second user. The second policy may be generated by means of the first identifier. Alternatively or in addition, the second policy may be individually designed based on an existing sub-function. The second policy may enable the first user to provide tailored access rights to one or more of his or her loT enabled devices or services to the second user.

The second policy of the first user may, for example, comprise an address of the second user. The method may in this case comprise the additional step of:
- transmission of an invitation to the second user by means of the first network entity.

The method may further comprise the additional step of:
- receiving in the first network entity a linking request from the second user, the linking request comprising a third identifier, wherein the third identifier is assigned to a first function of the second user, wherein the third identifier enables a connection to the first function of the second user by means of the communication network, wherein the third identifier enables identification of the second user, and wherein the third identifier comprises third information related to a first sub-function A of the first function of the second user.

The second user may be enabled to initialize linking a sub-function of one of his or her functions with a sub-function of one of the functions of the first user. This may happen automatically as soon as the second user receives an invitation of the first user.

The method may in the case described above further comprise the additional steps of:
- automatically determining by means of the first network entity whether the first sub-function A of the first function of the second user is compatible with the second sub-function A of the second function of the first user,
- automatically linking by means of the first network entity the second sub-function A of the second function of the first user with the first sub-function A of the of the first function of the second user such that a connection between the second function of the first user and the first function of the second user is enabled if it is determined that the second sub-function A of the second function of the first user is compatible with the first sub-function A of the first function of the second user.

The first user may, for example, organize a party. Name of friends of the first user may be taken, for example, from the Facebook account of the first user which is available via the first network entity. The mobile phone of the second user may receive the invitation and automatically or upon confirmation by the second user contact the account of the first user at the first network entity. The first network entity may check in this case compatibility of one of the sub-functions of the mobile phone of the second user with a sub-function of an loT enabled device of the first user which can be accessed by the second user based on the second policy. Such an loT enabled device may in this case be a refrigerator comprising a camera which can be accessed by means of an application running on the mobile device of the second user. The first network entity detects compatibility and links the camera functionality (sub-function) of the refrigerator (function) of the first user with the application (sub- function) of the mobile device (function) of the second user. The link may be established upon confirmation by the second user. The second user may be enabled by means of access to the camera of the refrigerator to check whether his favorite drink is available in the refrigerator. The first user may further enable access to an order functionality (sub-function) of the refrigerator which is connected to the Internet and a corresponding application on the mobile device of the second user may be linked to the order functionality. The second user may be able to order his favorite drink by means of the order functionality of the refrigerator of the first user. The second policy may also comprise certain limitations with respect to the use of a sub-function. The second policy may, for example, comprise in the case of the party organization a time limitation (only prior to the party), a limitation with respect to the subject matter which can be ordered (only drinks) and a financial limitation (a maximum of €50 per participant).

The second function may alternatively be assigned to a second user. The first network entity may in this case enable to link a sub-function of a function of the first user if there is an available and compatible sub-function of a function of the second user.

The second function may be assigned to a second policy of the second user. The method may further comprise the step of:
- checking by means of first network entity whether the first identifier comprises information in accordance with the second policy of the second user,
- automatically linking the first sub-function A of the first function of the first user with the second sub-function A of the second function of the second user if the first identifier comprises information in accordance with the second policy of the second user.

The situation may be similar as described above. The second user informs in this case the first user that there will be a party. The first user checks the account of the second user and a media database (sub-function) on a device (function) of the first user is compatible and automatically linked to a media player (sub-function) of an iPad (function) of the second user. The second policy of the second user restricts the link to music files. The music of the first user can be made be available by means of the link at the party. The first user confirms the link but restricts the access to a subfolder which is related to his most favorite music by means of a first policy of the first user.

According to a further aspect a first network entity for automatically linking at least a first function and a second function is provided. The first function comprises at least a first sub-function A. The second function comprises at least a second sub-function A. The first network entity comprises a first receiver. The first receiver is adapted to receive a first identifier. The first identifier is assigned to the first function and a first user. The first identifier enables connection to the first function by means of a communication network. The first identifier enables identification of the first user. The first identifier comprises first information related to the first sub-function A. The first network entity further comprises a first determination unit. The first determination unit is adapted to automatically determine whether the second sub-function A of the second function is compatible with the first sub-function A of the first function of the first user. The first network entity further comprises a first linking unit. The first linking unit is adapted to link the first sub-function A of the first function of the first user with the second sub-function A of the second function such that a connection or link between the first function and the second function is enabled if it is determined that the second sub-function A of the second function is compatible with the first sub-function A of the first function of the first user.

According to a further aspect a first network system comprising the first network entity and a second network entity is provided. The second network entity being adapted to provide second information related to the sub-function A of the first function of the first user.

According to a further aspect a communication system comprising the first network entity or the first network system is provided.

The first network entity as well as the second network entity may comprise one or more processors or microprocessors and one or more corresponding storage devices in order to enable the functionalities described above.

According to a further aspect of communication device is provided. The communication device is adapted to generate a first identifier. The first identifier is arranged to enable connection to a first function by means of a communication network. The first identifier enables identification of the first user. The first identifier further comprises first information related to the first sub-function A. The communication device may be a mobile communication device, a smartphone, a computer, and loT enabled device as described above.

The invention further relates to a computer program product. The computer program product comprises code means which can be saved on at least one memory device of the first network entity. The code means are arranged such that the method described by means of the different embodiments presented above can be executed by means of a processing device of the first network entity.

It shall be understood that a preferred embodiment of the invention can also be any combination of the dependent claims with the respective independent claim.

Further advantageous embodiments are defined below.

### Brief description of the drawings:

These and other aspects of the invention will be apparent from and elucidated with reference to the embodiments described hereinafter.

The invention will now be described, by way of example, based on embodiments with reference to the accompanying drawings.

In the drawings:
Fig. 1 shows a principal sketch of a first arrangement with a first network entity
Fig. 2 shows a principal sketch of a second arrangement with a first network entity and a second network entity
Fig. 3 shows a principal sketch of a third arrangement with a first network entity
Fig. 4 shows a principal sketch of a fourth arrangement with a first network entity
Fig. 5 shows a principal sketch of a fifth arrangement with a first network entity
Fig. 6 shows a principal sketch of a first network entity
Fig. 7 shows a principal sketch of a communication sequence
Fig. 8 shows a principal sketch of a method of automatically linking functions

In the Figures, like numbers refer to like objects throughout. Objects in the Figures are not necessarily drawn to scale.

### Detailed description of embodiments:

Various embodiments of the invention will now be described by means of the Figures.

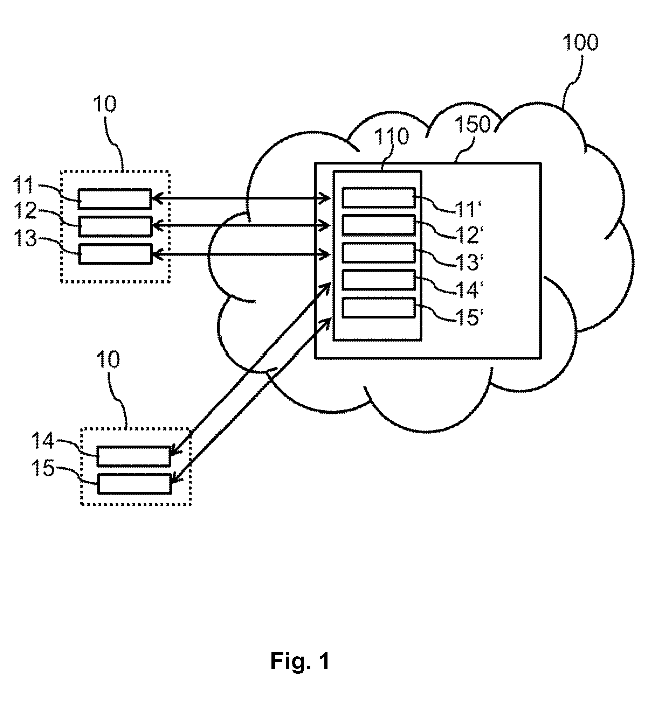

Fig. 1 shows a principal sketch of a first arrangement with a first network entity 150. The first network entity 150 is arranged in the Internet of Things (IoT) domain 100 which may be part of the Internet. The first user 10 is owner of different functions. A first function 11, a second function 12 and a third function 13 which are arranged at his home. The first function 11 is a TV set. The second function 12 is an loT enabled washing machine. The third function 13 is a media player. The first user 10 is further owner of a fourth function 14 and the fifth function 15 which are functions which are available via a network connection. The fourth function 14 is a Facebook account. The fifth function 15 is a music streaming service. The first network entity 150 comprises an image of the first user 110 which comprises an image of the first function 11', an image of the second function 12', an image of the third function 13', an image of the fourth function 14' and an image of the fifth function 15'. The image of the first user 110 may be manually generated by means of the first user 10 or automatically generated after activation of an loT enabled device by means of the first user 10. The images of the functions owned by the first user 10 may be generated by means of first identifiers received in the first network entity 150. The images of the functions comprised by the image of the first user 110 may be stored in one or more storage devices in the first network entity 150 may comprise information about sub-functions of the functions and information which enable information exchange between the sub-functions. Such information may comprise the address of the respective function and access details of the functions, respectively sub-functions in order to enable the information exchange.

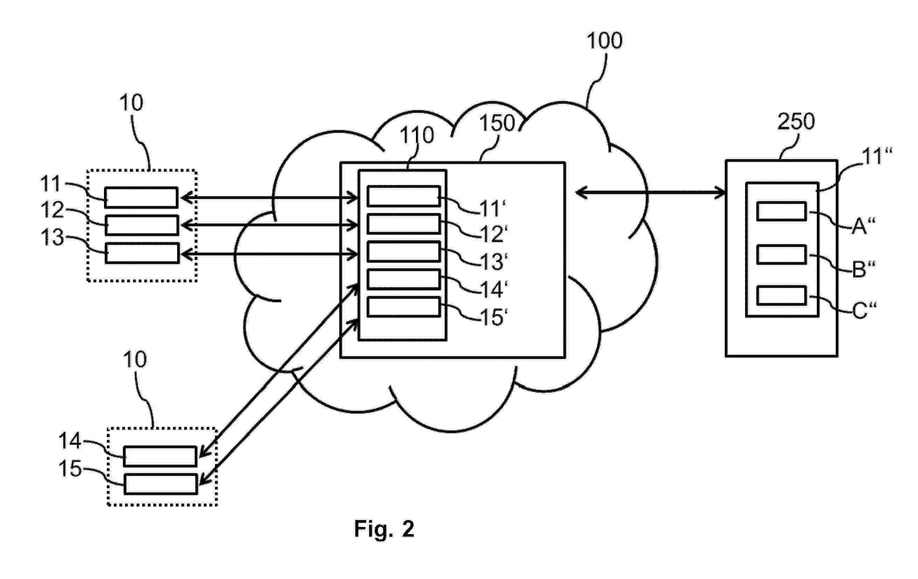

Fig. 2 shows a principal sketch of a second arrangement with a first network entity 150 and a second network entity 250. The configuration of the first network entity 150 and the functions owned by the first user is essentially the same as discussed with respect to Fig. 1. The first network entity 150 is connected to the second network entity 250 which comprises a description of the first function 11". The description of the first function 11 "comprises a description of the first sub-function A", a description of a first sub-function B" and a description of a first sub-function C". The first network entity 150 receives second information from the second network entity 250 comprising the description of the first function 11". The first network entity 150 may contact the second network entity 250 in order to receive the second information. Alternatively or in addition, the second network entity 250 may submit the second information regularly or if an update of the description of the first function 11" is available. The first network entity 150 contacts the second network entity 250 by means of contact information which was provided by the first function 11 and stored in the image of the first function 11'. The second information received from the second network entity 250 enables update of compatibility information and linking details in the image of the first function 11' stored in the image of the first user 110 in the first network entity 150. The first network entity 150 checks one, two or even all available functions after receiving second information in order to update the existing links between different functions or sub-functions. The first network entity 150 may alternatively or in addition determine a new compatibility between different sub-functions of different functions and automatically link the respective sub-functions based on the information provided with the second information. The data exchange between the first network entity 150 and the second network entity 250 may enable a self-learning system comprising self-maintenance functionalities. Services or devices of one or more users may be linked automatically if corresponding second information is provided by means of the second network entity 250. The first network entity 150 may, for example, be adapted to check if there is a first policy of the first user available. The first policy allows connection of one or more functions of the first user with one or more functions of a second user. The first network entity 150 may determine whether a new link may be possible in view of second information received from the second network entity 250. The first network entity 150 may initiate a link between a sub-function of a function of the first user and a sub-function of a function of the second user in accordance with a first policy. The proposed link may be confirmed by an image of the second user 120 in the first network entity 150 (or another network entity comprising the image of the second user 120) if there is a second policy of the second user allowing such a link. The second network entity 250 may be a server of a manufacturer of loT enabled devices or a server of a service provider offering loT enabled services.

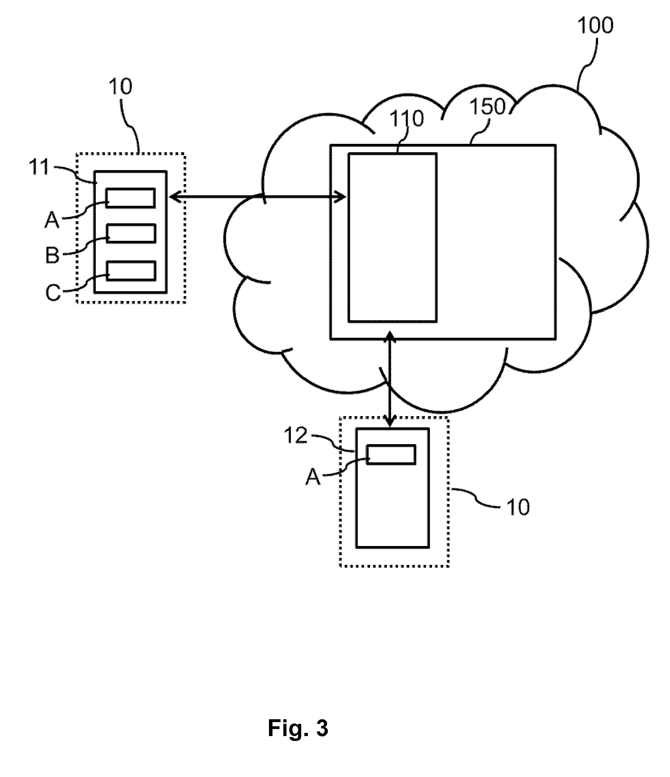

Fig. 3 shows a principal sketch of a third arrangement with a first network entity 150. The configuration of the arrangement is similar to the arrangement discussed with respect to Fig. 1. The first network entity 150 provides a link between a first sub-function A of a first function 11 of the first user 10 with a compatible first sub-function A of a second function 12 of the first user 10. The first function 11 of the first user 10 is positioned at the home of the first user 10. The second function 12 of the first user 10 is a service enabled via the Internet. The connection or link between the first sub-function A of the first function 11 of the first user 10 and the first sub-function A of the second function 12 of the first user 10 is provided via the image of the first user 110 in the first network entity 150. The sub-functions of the different functions exchange information via the first network entity 150.

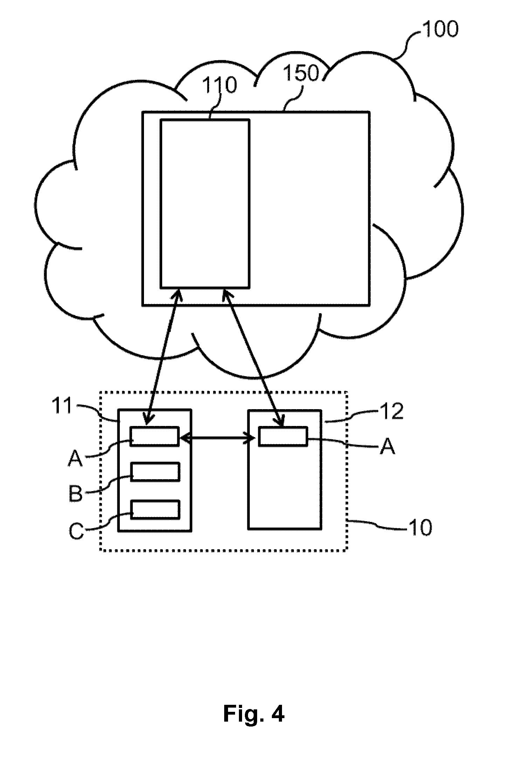

Fig. 4 shows a principal sketch of a fourth arrangement with a first network entity 150. The configuration of the arrangement is similar to the arrangement discussed with respect to Fig. 1. The first network entity 150 enables a link between a first sub-function A of a first function 11 of the first user 10 with a compatible first sub-function A of a second function 12 of the first user 10. The first function 11 of the first user 10 is a smart phone of the first user 10. The second function 12 of the first user 10 is positioned at the home of the first user 10 (e.g. refrigerator). The connection or link between the first sub-function A of the first function 11 of the first user 10 and the first sub-function A of the second function 12 of the first user 10 is initiated via the image of the first user 110 in the first network entity 15. The smart phone and the refrigerator comprise individual IP addresses enabling direct communication between the smart phone and refrigerator. The first network entity 150 enables or initiates in this case the link between the sub-functions of the different functions but the information is directly exchanged between the functions or sub- functions after establishing the link between the functions or respective sub-functions. The information may comprise status information of the respective function or sub-function or orders to execute a defined sub-function. The first network entity 150 may adapt or update the link as soon as new or changed information is available in the image of the respective function in the image of the first user 110 in the first network entity 150. The first user 10 may be enabled by means of the link between the refrigerator and the smart phone to check availability of drinks or food (camera in the refrigerator). The first user 10 may in addition receive an alert if the temperature in the refrigerator increases by means of the link between the refrigerator and the smart phone. The first user 10 may further be able to reduce the temperature in the refrigerator by accessing temperature control of the refrigerator by means of the smart phone by means of the link.

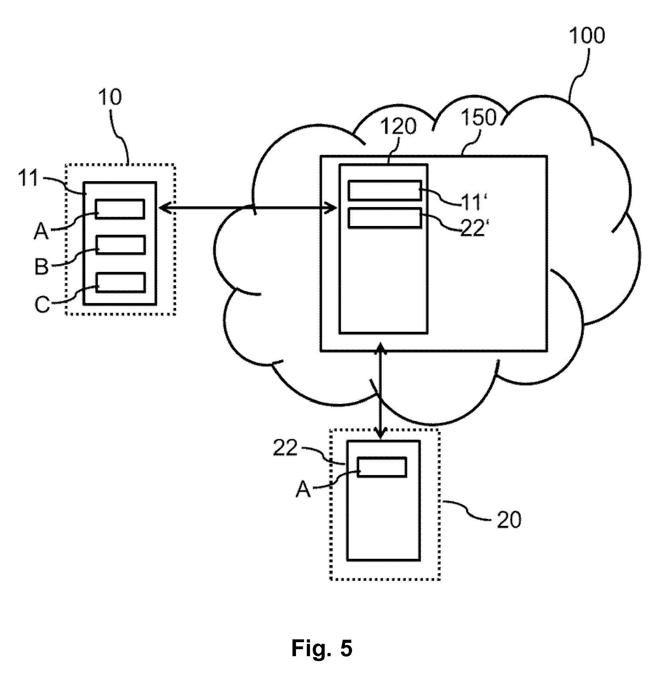

Fig. 5 shows a principal sketch of a fifth arrangement with a first network entity 150. The configuration of the arrangement similar to the arrangement discussed with respect to Fig. 1. The first network entity 150 provides a link between a first sub-function A of a first function 11 of a first user 10 with a compatible first sub-function A of the second function 22 of a second user 20. The first function 11 of the first user 10 is a communication device of the first user 10. The second function 22 of the second user 20 is a computer comprising video data, image data and music data. The connection or link between the first sub-function A of the first function 11 of the first user 10 and the first sub-function A of the second function 22 of the second user 20 is provided via an image of the second user 120 in the first network entity 150. The image of the second user 120 comprises an image of the first function 11' of the first user 10 and an image of the second function 22' of the second user 20. The image of the first function 11' of the first user 10 comprises a second policy of the second user 20 allowing access to defined data files of the second user 20 comprised by the computer of the second user 20. The data files may, for example, comprise an extension related to the first user 10 (e.g. name of the first user 10). The communication device of the first user 10 communicates in this case directly with the first network entity 150 or the image of the second user 120. Alternatively, the communication device of the first user 10 may communicate with an image of the first user 110 in the first network entity 150 or even a different first network entity. The image of the first user 110 or functions respectively sub-functions may be linked to the image of the second user 120. The image of the first user 110 also comprises an image of the first function of the first user 10 and an image of the second function of the second user 20. Each of the images of the functions of the first user 10 may comprise a first policy of the first user 10. The first network entity 150 (or even different first network entities 150) may enable in this case a flexible link between functions or sub-functions of different users.

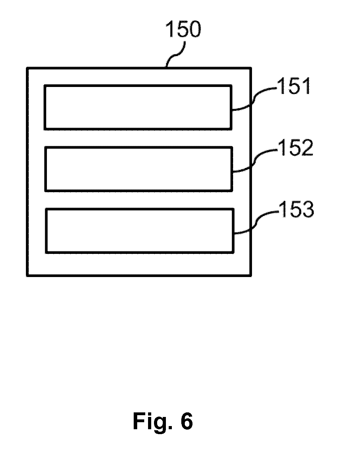

Fig. 6 shows a principal sketch of a first network entity 150. The first network entity 150 is adapted to automatically link at least a first function and a second function. The first function comprises at least a first sub-function A. The second function comprises at least a second sub-function A. The first network entity 150 comprises a first receiver 151. The first receiver 151 is adapted to receive a first identifier. The first identifier is assigned to the first function and a first user. The first identifier enables connection to the first function by means of a communication network. The first identifier further enables identification of the first user. The first identifier further comprises first information related to the first sub-function A. The first network entity 150 further comprises a first determination unit 152. The first determination unit 152 is adapted to automatically determine whether the second sub-function A of the second function is compatible with the first sub-function A of the first function of the first user. The first network entity 150 further comprises a first linking unit 153. The first linking unit 153 is adapted to link the first sub-function A of the first function of the first user with the second sub-function A of the second function such that a connection or link between the first function and the second function is enabled if it is determined that the second sub-function A of the second function is compatible with the first sub-function A of the first function of the first user.

In the following some of the implementation details are discussed. The user of the service provided by the first network entity 150 may manage his list of published devices via an application on his mobile device, using his mobile device or a web portal. An enrolment of mobile devices may be triggered via the use of the application, and may be authenticated via MSISDN. The application connects to an IoT_DNS service, which may reside somewhere in a services area of a service provider (e.g. Vodafone). Services area may be arranged behind the GGSN/PGW, preferably not in the access network. Communication could be performed via HTTP(S) or SIP(S). SIP(S) may be best suited because this is the preferred protocol for IMS/RCS and VoLTE and it may also be implemented in other loT enabled devices. HTTP or XMPP extensions may also be used. Once the mobile device is enrolled, the user account is created and the user can add/enroll more loT enabled devices or services to his account and give them, for example, friendly names. Adding of functions may be preferred manually by means of the user or automatically as soon as the user provides a hint to the user account (image of the user) and the first network entity 150. If the loT enabled devices have, for example, LAN capabilities, they may support IPv6, have a basic DHCP client or provide at least possibility to setup a static IPv4 address in order to enable access to the respective device. The user may enroll more of his devices by being in the same network as they are, via specific protocols, remotely or connected via VPN. Depending on the loT enabled device HTTP may be available or, for example, RFC 7252 Constrained Application Protocol (CoAP) or any other suitable protocol may be available locally for discovery. The loT enabled device may be mapped to an HTTP or SIP resource, so that it can be reachable via the IoT_DNS system from all other mapped devices and other users as described above.

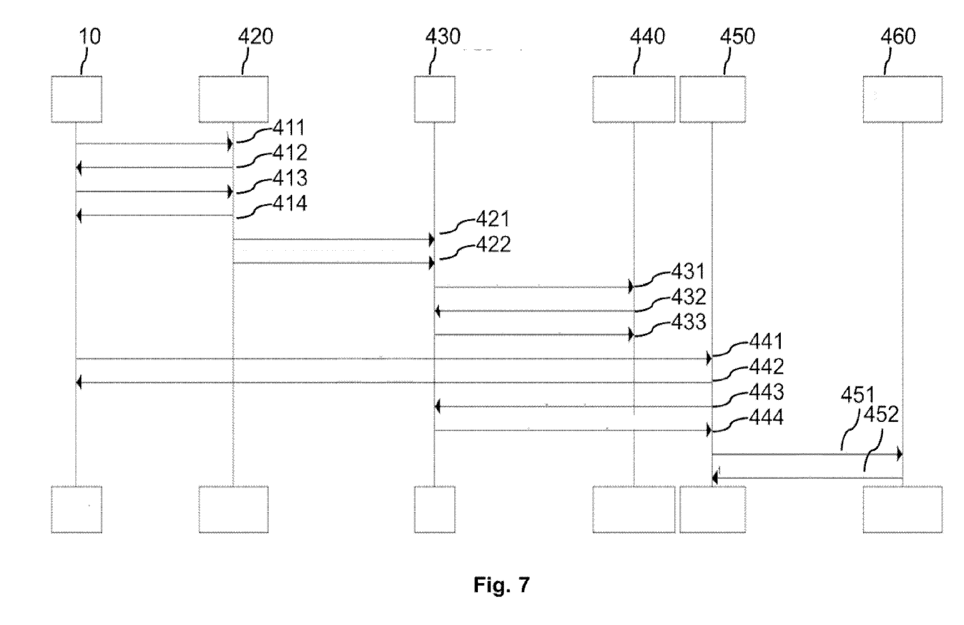

Fig. 7 shows a principal sketch of a communication sequence which may be used in order to enable access to functions or sub-functions.

The first user provides login information to a network 420 in step 411. The network 420 confirms the login in step 412. The first user 10 registers a function in step 413. The network 420 provides an IP address for the function in step 414. The IP address of the function is stored in the backend (BE) 430 of the service provider in step 421. Information related to the function (MSISDN, IMEI, MAC address,...) is stored in the backend 430 in step 422. The IP address of the user function is stored in the DNS logic 440 in step 431. The DNS logic 440 checks in step 432 if the IP address changed. The backend 430 provides an updated IP address if the IP address changed in step 433. The first user 10 provides login details to the loT service 450 in step 441. The login is confirmed by the loT service 450 in step 442. The loT service 450 requests the user functions from the backend 430 in step 443. The backend 430 provides a list of functions of the first user 10 the first user 10 is willing to share by means of the loT service 450 in step 444. The loT service 450 requests a description of sub- functions of the functions of the first user 10 from a profile database 460 in step 451. The profile database 460 provides information with respect to supported sub-functions of the functions of the first user 10 in step 452.

The part of the network 420, the backend 430, the DNS logic 440 and the loT service 450 which are involved in the communication process for enabling access to the functions of the first user 10 are part of the first network entity 150. The first network entity 150 is in this case a distributed network arrangement wherein the core of the first network entity 150 is given by the loT service 450. The profile database 460 may be part of the first network entity 150. The profile database 460 may alternatively be a second network entity 250 comprising a database provided, for example, by a manufacturer of loT enabled devices.

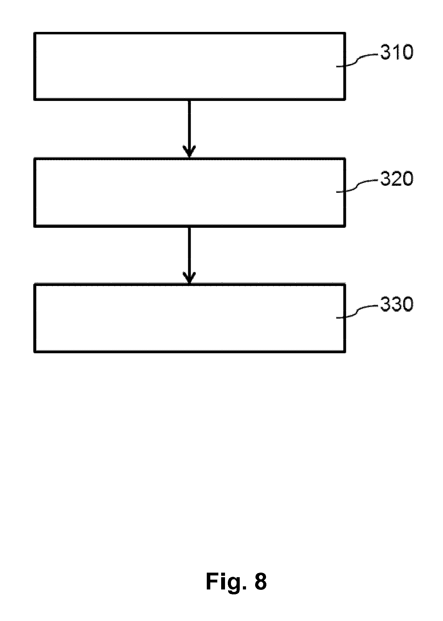

Fig. 8 shows a principal sketch of a method of automatically linking or connecting at least a first function and a second function. The first function comprises at least a first sub-function A. The second function comprises at least a second sub-function A. A first identifier is received in in a first network entity 150 in step 310. The first identifier is assigned to the first function and a first user 10. The first identifier enables connection to the first function by means of a communication network. The first identifier enables identification of the first user. The first identifier comprises first information related to the first sub-function A. In step 320 it is automatically determined by means of the first network entity 150 whether the second sub-function A of the second function is compatible with the first sub-function A of the first function of the first user 10. The first network entity 150 automatically links the first sub-function A of the first function of the first user 10 with the second sub-function A of the second function in step 330 such that a connection between the first function and the second function is enabled if it is determined in step 320 that the second sub-function A of the second function is compatible with the first sub-function A of the first function of the first user. The connection between the first function and the second function may enable a data exchange or even exchange of orders.

It is a basic idea of the present invention to overcome the issue with the internet of things users not being able to distinguish the devices that they have and how to work with them. Basically by being able to map a user device or function with an IP and IMEI the end user does not need to know, for example, the mobile number of the person he wants to interact with. He just needs to know his friendly name and the system will give him what are the options to interact with that person and/or a specific device. The mapping of different kind of device names by a method of domain mapping may give the capability on how to interact with users and user devices or functions.

While the invention has been illustrated and described in detail in the drawings and the foregoing description, such illustration and description are to be considered illustrative or exemplary and not restrictive.

From reading the present disclosure, other modifications will be apparent to persons skilled in the art. Such modifications may involve other features which are already known in the art and which may be used instead of or in addition to features already described herein.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality of elements or steps. The mere fact that certain measures are recited in mutually different dependent claims does not indicate that a combination of these measures cannot be used to advantage.

Any reference signs in the claims should not be construed as limiting the scope thereof.

### List of reference numerals:

- 10: first user
- 11: first function
- 11': image first function
- 11": description of first function
- 12: second function
- 12': image second function
- 13: third function
- 13': image third function
- 14: fourth function
- 14': image fourth function
- 15: fifth function
- 15': image fifth function
- 20: second user
- 22: second function
- 100: Internet of Things (IoT) domain
- 110: image first user
- 120: image second user
- 150: first network entity
- 151: first receiver
- 152: first determination unit
- 153: first linking unit
- 250: second network entity
- 310: step of receiving first identifier
- 320: step of determining compatibility
- 330: step of linking functions
- 411: login to network
- 412: confirm login to network
- 413: register function
- 414: provide IP address
- 420: network
- 421: store function
- 422: store information related to function
- 430: Backend (PE)
- 431: update function IP
- 432: check IP change
- 433: update IP
- 440: DNS logic
- 441: service login
- 442: confirm service login
- 443: request user functions
- 444: submit user functions
- 450: loT service
- 451: check sub-functions of function
- 452: confirm supported sub-functions
- 460: profile database

## Claims

1. A method of automatically linking at least a first function (11) and a second function (12, 22), wherein the first function (11) comprises at least a first sub-function A, and wherein the second function (12, 22) comprises at least a second sub-function A, the method comprising the steps of:
- receiving a first identifier in a first network entity (150), wherein the first identifier is assigned to the first function (11) and a first user (10), wherein the first identifier enables connection to the first function (11) by means of a communication network, wherein the first identifier enables identification of the first user (10), and wherein the first identifier comprises first information related to the first sub-function A,
- automatically determining by means of the first network entity (150) whether the second sub-function A of the second function (12, 22) is compatible with the first sub-function A of the first function (11) of the first user (10),
- automatically linking by means of the first network entity (150) the first sub-function A of the first function (11) of the first user (10) with the second sub-function A of the second function (12, 22) such that a connection between the first function (11) and the second function (12, 22) is enabled if it is determined that the second sub-function A of the second function (12, 22) is compatible with the first sub-function A of the first function (11) of the first user (10).

2. The method according to claim 1, wherein the method comprises the additional steps of:
- receiving prior to receiving the first identifier a second identifier in the first network entity (150), wherein the second identifier is assigned to the second function (12, 22), wherein the second identifier enables connection to the second function (12, 22) by means of the communication network, wherein the second identifier comprises second information related to the second sub-function A of the second function (12, 22).

3. The method according to claim 1 or 2, wherein the connection between the first function (11) and the second function (12, 22) is constituted via the first network entity (150).

4. The method according to claim 1 or 2, wherein the method comprises the additional steps of:
- generating first linking information by means of the first network entity (150),
- submitting the first linking information from the first network entity (150) to the first function (11) or the second function (12, 22),
- establishing the connection between the first function (11) and the second function (12) by means of the first function of (11) or the second function (12, 22).

5. The method according to any one of the preceding claims, wherein the method comprises the additional steps of:
- contacting a second network entity (250) by means of the first network entity (150) based on the first information related to the first sub-function A of the first function (11) of the first user (10),
- receiving in the first network entity (150) second information related to the first sub-function A of the first function (11) of the first user (10).

6. The method according to claim 5, wherein the compatibility between the second sub-function A of the second function (12, 22) and the first sub-function A of the first function (11) of the first user (10) is determined by means of the second information related to the first sub-function A.

7. The method according to any one of the preceding claims, wherein the second function (12) is assigned to the first user (10).

8. The method according to claim 7, wherein the second function (12) is assigned to a second policy of the first user (10), the second policy comprising access rights to the second function (12) by means of a second user (20).

9. The method according to claim 7, wherein the second policy of the first user (10) comprises an address of the second user (20), wherein the method comprises additional step of:
- transmission of an invitation to the second user (20) by means of the first network entity (150).

10. The method according to claim 8 or 9, wherein the method comprises the additional step of:
- receiving in the first network entity (150) a linking request from the second user (20), the linking request comprising a third identifier, wherein the third identifier is assigned to a first function (21) of the second user (20), wherein the third identifier enables a connection to the first function (21) of the second user (20) by means of the communication network, wherein the third identifier enables identification of the second user (20), and wherein the third identifier comprises third information related to a first sub-function A of the first function (21) of the second user (20).

11. The method according to claim 10 wherein the method comprises the additional steps of:
- automatically determining by means of the first network entity (150) whether the first sub-function A of the first function (21) of the second user (20) is compatible with the second sub-function A of the second function (12) of the first user (10),
- automatically linking by means of the first network entity (150) the second sub-function A of the second function (12) of the first user (10) with the first sub-function A of the of the first function (21) of the second user (20) such that a connection between the second function (12) of the first user (10) and the first function (21) of the second user (20) is enabled if it is determined that the second sub-function A of the second function (12) of the first user (10) is compatible with the first sub-function A of the first function (21) of the second user (20).

12. The method according to any one of claims 1 to 6, wherein the second function (22) is assigned to a second user (20).

13. The method according to claim 12, wherein the second function (22) is assigned to a second policy of the second user (20), and wherein the method comprises the step of:
- checking by means of first network entity (150) whether the first identifier comprises information in accordance with the second policy of the second user (20),
- automatically linking the first sub-function A of the first function (11) of the first user (10) with the second sub-function A of the second function (22) of the second user (20) if the first identifier comprises information in accordance with the second policy of the second user (20).

14. A first network entity (150) for automatically linking at least a first function (11) and a second function (12, 22), wherein the first function (11) comprises at least a first sub-function A, and wherein the second function (12, 22) comprises at least a second sub-function A, wherein the first network entity (150) comprises a first receiver (151), wherein the first receiver (150) is adapted to receive a first identifier, wherein the first identifier is assigned to the first function (11) and a first user (10), wherein the first identifier enables connection to the first function (11) by means of a communication network, wherein the first identifier enables identification of the first user (10), and wherein the first identifier comprises first information related to the first sub-function A, wherein the first network entity (150) further comprises a first determination unit (152), wherein the first determination unit (152) is adapted to automatically determine whether the second sub-function A of the second function (12, 22) is compatible with the first sub-function A of the first function (11) of the first user (10), wherein the first network entity (150) further comprises a first linking unit (153), wherein the first linking unit (153) is adapted to link the first sub-function A of the first function (11) of the first user (10) of the with the second sub-function A of the second function (12, 22) such that a connection between the first function (11) and the second function (12, 22) is enabled if it is determined that the second sub-function A of the second function (12, 22) is compatible with the first sub-function A of the first function (11) of the first user (10).

15. A computer program product comprising code means which can be saved on at least one memory device of the first network entity (150) according to claim 14, wherein the code means being arranged such that the method according to any one of claims 1 to 13 can be executed by means of a processing device of the first network entity (150) according to claim 14.
